# FASCICULE DE BREVET EUROPEEN

(11) **EP 2 739 383 B1**
(45) Date de publication et mention de la délivrance du brevet: **30.12.2020**
(21) Numéro de dépôt: 12750467.8
(22) Date de dépôt: 02.08.2012
(51) Int. Cl.: B01J 8/04, B01D 3/20, B01D 3/00

(54) **PLATEAU DISTRIBUTEUR D'UN GAZ ET D'UN LIQUIDE, REACTEUR EQUIPE D'UN TEL PLATEAU ET UTILISATION DUDIT PLATEAU**
SCHALE ZUR ABGABE VON EINEM GAS UND EINER FLÜSSIGKEIT, REAKTOR MIT DERARTIGER SCHALE UND VERWENDUNG BESAGTER SCHALE
TRAY FOR DISPENSING A GAS AND A LIQUID, REACTOR PROVIDED WITH SUCH A TRAY, AND USE OF SAID TRAY

(30) Priorité: 03.08.2011 FR 1157110
(43) Date de publication de la demande: 11.06.2014
(73) Titulaire: TOTAL MARKETING SERVICES, 92800 Puteaux (FR)
(72) Inventeur: NASCIMENTO, Pedro, F-76620 Le Havre (FR); DA SILVA, Pedro, F-77870 Vulaines-sur-Seine (FR)
(74) Mandataire: Fédit-Loriot
(86) Numéro de dépôt international: PCT/FR2012/051829
(87) Numéro de publication internationale: WO 2013/017804

(56) Documents cités:
- EP-A1- 2 075 056
- US-A- 2 061 830
- US-A- 3 524 731
- US-A- 4 140 625
- US-A- 4 526 757
- US-A- 4 820 455
- US-A- 5 799 877

## Description

L'invention concerne un plateau distributeur d'un gaz et d'un liquide, un réacteur équipé d'un tel plateau et l'utilisation de ce plateau.

La présente invention concerne le domaine des réacteurs à lit(s) catalytique(s) fixe(s) alimentés par des fluides, liquides et gazeux, pouvant fonctionner à co-courant descendant. L'invention propose un nouveau plateau distributeur, situé en amont d'un lit catalytique, capable d'améliorer la distribution des fluides d'alimentation sur ledit lit catalytique.

Il existe un grand nombre de type de plateaux pour faciliter les mélanges thermiques ou physiques des fluides liquides et gazeux, que ceux-ci soient introduits à co-courant ou à contrecourant. Le brevet US 5 942 162 décrit les différentes technologies possibles pour des mélanges à co-courant. Parmi ceux-ci, les plateaux de distribution (ou plateaux distributeurs) les plus classiques sont des plateaux perforés d'orifices servant de support à des cheminées. En particulier, chaque orifice du plateau débouche sur une cheminée dont l'extrémité supérieure semi-ouverte autorise le passage du gaz réactif. Pour le passage du liquide vers l'intérieur de la cheminée, plusieurs technologies ont été développées comme décrit dans les brevets US 5 882 610, US 6 093 373, EP 1 147 808 et EP 1 147 809. Des ouvertures ou des lumières, situées en partie basse de chaque cheminée, permettent d'assurer le mélange entre le liquide et le gaz au sein des cheminées, en partie basse de ces dernières, avant la traversée du lit catalytique, lequel est souvent précédé d'au moins une couche de billes inertes destinées à diviser le flux de charge et de le redistribuer afin d'éviter la création de circuits préférentiels, sources de points chauds et de cokage dans le lit catalytique. Dans de telles applications, les rapports volumiques du gaz sur le liquide sont souvent supérieurs à 3 :1 et habituellement inférieurs à 400 :1, les cas les plus courants étant lorsque ce rapport varie de 10 à 200.

Cependant, il existe des configurations pour lesquelles la quantité de gaz entrant par les cheminées est très faible par rapport à la quantité de liquide, par exemple lorsque le rapport volumique du gaz sur le liquide est inférieur ou égal à 3. Comme la quantité de liquide est élevée, on augmente très fortement le nombre de cheminées qui sont dimensionnées plus largement, mais, le mélange entre liquide et gaz se fait toujours mal et ce mode de mélange est donc inefficace. Dans des cas extrêmes, lorsque la section des lumières, en partie basse de la cheminée, est supérieure à la section de la cheminée, tout le liquide ne peut pas passer par les cheminées et le niveau du liquide monte sur le plateau, celui-ci pouvant dépasser la hauteur des cheminées, ce qui perturbe l'écoulement régulier du gaz. Jusqu'à présent, la seule solution à ce type de problème était la séparation du passage du gaz dans des cheminées dédiées et du liquide par des trous régulièrement distribués sur toute la surface du plateau. Cependant dans ces conditions, le passage du gaz et du liquide sont séparés et il n'y a pas de mélange gaz/liquide, ni de dispersion du liquide assurée par le gaz.

Le document US 5 799 877 décrit un dispositif de distribution d'un fluide sur un lit de particules, ce dispositif étant formé d'un plateau perforé d'orifices servant de support à des cheminées. L'objectif de ce document est de réaliser une distribution uniforme d'un mélange de deux phases liquide-gazeuse au travers du lit de particules avec une faible baisse de pression, les deux phases circulant à co-courant descendant. Pour atteindre cet objectif, le plateau comprend des conduites pour le passage du gaz entourées chacune d'une conduite pour le passage du liquide de sorte que le liquide sort par un espace annulaire ménagé entre les deux conduites. Le flux gazeux central est ainsi entouré d'un anneau de liquide lorsqu'il sort sous le plateau et, du fait d'une faible chute de pression au travers du conduit de gaz, le gaz se détend à la sortie et en rentrant en contact avec le liquide l'entourant, forme un spray de liquide et de gaz sous le plateau. Dans ce document, les conduites de gaz et de liquide sont des tubes concentriques. La distribution de liquide peut être continue en réalisant des fentes sur la paroi des tubes de passage du liquide. La distribution de liquide peut également être pulsée en fermant le sommet des tubes de passage du liquide, d'une hauteur déterminée, et en réalisant une entrée pour le liquide à proximité du sommet de ces tubes : lorsque le liquide atteint cette entrée, il est évacué sous le plateau. Les tubes de passage de liquide fonctionnent alors à la manière de siphons (ce principe est également décrit dans le document US 4 526 757). Enfin, la distribution du liquide peut être mixte, un flux continu de liquide étant obtenu par des fentes sur la paroi des tubes, le sommet de ces tubes étant fermés pour former des siphons assurant par intermittence un flux pulsé de liquide. Des déflecteurs situés sous le plateau, en dessous des sorties de gaz et de liquide, peuvent aider à la formation de spray de gaz et de liquide, notamment à la formation d'un spray conique de gaz et de liquide, tel que décrit dans le document US5403561.

Ce document US 5 799 877 n'enseigne pas comment améliorer le mélange de gaz et de liquide. En outre, la demanderesse a constaté que la présence de siphons pour l'introduction du liquide ne permet pas d'obtenir un bon mélange du gaz et du liquide lorsque ces derniers se mélangent difficilement, en particulier lorsque le rapport volumique gaz/liquide est inférieur ou égal à 3.

Lorsque, le gaz et le liquide se mélangent difficilement, le déroulement de la réaction au sein du lit catalytique en aval du plateau distributeur ne se fait pas de façon optimale.

L'invention vise à pallier ces inconvénients en proposant un plateau distributeur permettant une distribution homogène de gaz et de liquide. Un tel plateau distributeur est plus particulièrement destiné à un réacteur comprenant au moins un lit catalytique, mais il pourrait s'adapter à des réacteurs à lits multiples.

A cet effet, un premier objet de l'invention concerne un plateau distributeur d'un gaz et d'un liquide circulants à co-courant descendant selon la revendication 1, ledit plateau comprenant une plaque perforée d'orifices supportant des cheminées creuses s'étendant perpendiculairement à ladite plaque, chaque orifice de la plaque étant surmonté par une cheminée de même section que ledit orifice, caractérisé en ce que la plaque est équipée d'une pluralité d'ouvertures disposées à la périphérie de chaque cheminée à l'intérieur d'un cercle circonscrit dont le centre est confondu avec le centre de la cheminée et dont le rayon est inférieur ou égal à 1/3 de la distance la plus courte séparant deux cheminées adjacentes, et en ce qu'un unique élément déflecteur est disposé sous chaque cheminée, les ouvertures et l'élément déflecteur associés à chacune des cheminées étant agencés afin d'induire un mouvement de rotation au mélange gaz-liquide sous chaque cheminée.

Par « centre de la cheminée », on entend ci-dessus le centre de la cheminée dans le plan de la plaque. Dit autrement, le cercle circonscrit est centré autour de la cheminée correspondante.

Ces ouvertures traversent ainsi la plaque de part en part pour le passage du liquide au travers de la plaque, et sont situées autour de chaque cheminée. En particulier, ces ouvertures sont situées dans un espace de la plaque délimité d'une part par la cheminée et d'autre part par un cercle circonscrit dont le centre est confondu avec le centre de la cheminée et dont le rayon est inférieur ou égal à 1/3 de la distance la plus courte séparant deux cheminées adjacentes. Cette distance entre cheminées est mesurée entre les centres (ou axes) des cheminées considérées. Les ouvertures sont ainsi localisées en périphérie de chaque cheminée dans ledit cercle circonscrit.

Le gaz traversant le plateau via les cheminées et le liquide traversant le plateau distributeur via les ouvertures autour de chaque cheminée, le mélange du gaz et du liquide ne se fait donc plus dans la partie basse de chaque cheminée, comme c'était le cas pour les plateaux de distribution de l'art antérieur, mais sous chaque cheminée du plateau distributeur. En outre, les ouvertures réalisées dans la plaque formant le plateau ne sont pas distribuées sur toute la surface du plateau, mais sont localisées uniquement en périphérie des cheminées.

Le mouvement de rotation peut être obtenu par des formes particulières des ouvertures et/ou de l'unique déflecteur associé permettant de diriger le flux liquide et/ou gazeux en dessous de la plaque en vue de leur mélange. Les formes particulières des ouvertures et/ou du déflecteur associés seront décrites dans la suite de la présente description.

Quelque soit sa forme, chaque élément déflecteur a pour fonction de diriger le gaz qui descend par la cheminée vers un liquide distribué en périphérie de la cheminée par lesdites ouvertures.

De tels éléments déflecteurs permettent d'optimiser le mélange du gaz et du liquide. Notamment, sous chaque cheminée, le ou les éléments déflecteurs définissent une zone de mélange dans laquelle le gaz arrivant par la cheminée et le liquide arrivant par les ouvertures se mélangent. Il n'y a pas de distance optimale entre la plaque et le dit élément déflecteur, mais cette distance sera préférentiellement choisie comme variant de 1mm à 20mm et de préférence comme variant de 2 à 10 mm.

Avantageusement, l'unique élément déflecteur disposé sous chaque cheminée présente une surface projetée sur la plaque dont le contour est tel qu'il recouvre, au moins en partie, lesdites ouvertures disposées à la périphérie de la cheminée auquel il est associé. La surface projetée de l'élément déflecteur sur la plaque est supérieure à la surface de la cheminée, et éventuellement sensiblement égale ou supérieure à la surface du cercle circonscrit englobant ces ouvertures sur la plaque: l'élément déflecteur dirige le gaz provenant de la cheminée vers le liquide pour faciliter le mélange du gaz provenant de la cheminée et du liquide provenant des ouvertures.

Lorsque les ouvertures traversant la plaque du plateau distributeur sont agencées afin d'induire un mouvement de rotation au liquide les traversant, chaque élément déflecteur associé à ces ouvertures peut être plat et/ou convexe, de convexité préférentiellement dirigée vers la cheminée. La forme convexe permet d'ajuster la vitesse du gaz en dessous de la cheminée tout en permettant d'avoir suffisamment d'espace en périphérie pour le passage du liquide. L'élément déflecteur est alors de préférence une surface pleine, sans orifice.

Par exemple, si chaque élément déflecteur est constitué d'une paroi plane disposée sous la cheminée parallèlement à la plaque, ladite paroi plane est éventuellement bordée par une paroi inclinée dont l'angle d'inclinaison n'est pas essentiel.

Avantageusement, les ouvertures traversant la plaque du plateau distributeur peuvent être réparties régulièrement à la périphérie de chaque cheminée dans le dit cercle circonscrit, ce qui permet d'améliorer la répartition du liquide traversant le plateau distributeur autour de chaque cheminée, et ainsi d'améliorer le mélange gaz-liquide sous chaque cheminée.

De préférence, ces ouvertures seront identiques. Elles peuvent être de forme circulaire, triangulaire, carré, rectangulaire ou tout autre polygone. Elles sont par exemple dimensionnées pour laisser passer tout le liquide sans que le niveau de liquide sur le plateau dépasse la hauteur de la cheminée, autrement dit le sommet de la cheminée.

De préférence, ces ouvertures ne comportent pas de partie saillante sur la face de la plaque supportant les cheminées. En particulier, ces ouvertures ne sont pas surmontées de tubes ou cheminées, afin de faciliter le passage du liquide.

Les ouvertures réalisées au travers de la plaque du plateau distributeur selon l'invention peuvent être obtenues par perçage, découpe et/ou emboutissage et comporter des restes de plaque découpée et emboutie formant une paroi déflectrice pour le liquide, sous la plaque.

Selon cette première forme de réalisation de l'invention, les parois déflectrices de ces ouvertures réalisées au travers de la plaque du plateau distributeur permettent d'induire un mouvement de rotation au liquide traversant les dites ouvertures. Ceci, en association avec l'unique déflecteur sous chaque cheminée, permet d'améliorer la dispersion du mélange formé sous le plateau distributeur et plus particulièrement d'améliorer le mélange du gaz et du liquide, notamment lorsque le volume de gaz est faible.

Selon l'invention, chaque ouverture réalisée au travers de la plaque du plateau distributeur comporte une paroi déflectrice, plane ou incurvée, et telle que décrite dans la revendication 1, résultant par exemple du découpage, perçage et/ou emboutissage, pour diriger le fluide suivant une direction inclinée d'un angle α par rapport à la plaque et sensiblement tangente à un cercle dont la cheminée est le centre.

Selon l'invention, la paroi déflectrice de chaque ouverture réalisée au travers de la plaque du plateau distributeur est plane ou incurvée, et inclinée d'un angle α par rapport à la plaque.

De préférence, chaque ouverture disposée sur la périphérie d'une cheminée s'étend le long d'un rayon d'un cercle dont cette cheminée est le centre, et toutes les ouvertures disposées sur la périphérie d'une même cheminée sont orientées dans une même direction par rapport à leur rayon respectif.

Un tel agencement induit une circulation des flux de liquide issus de chaque ouverture selon un mouvement globalement circulaire, et notamment sensiblement hélicoïdal, sous le plateau de distribution, permettant une distribution périphérique du mélange liquide-gaz formé sous chaque cheminée et une amélioration du mélange gaz-liquide.

Par exemple, ces parois déflectrices associées aux ouvertures peuvent être formées en coupant deux cotés d'un triangle et en pliant la partie triangulaire ainsi découpée sur le troisième coté du triangle, par exemple le long d'un rayon du cercle circonscrit, dans une direction opposée à la cheminée, le plan de la dite partie triangulaire pliée formant un angle α par rapport au plan de la plaque.

Quelque soit le mode de réalisation des ouvertures, cet angle α est par exemple d'au moins 30°, de préférence de 30 à 60°.

Dans un deuxième mode de réalisation de l'invention, ce ne sont pas les ouvertures du plateau qui permettent d'induire un mouvement de rotation au mélange gaz liquide sous une cheminée, mais l'unique élément déflecteur disposé sous cette cheminée. Ceci permet également d'améliorer la dispersion du mélange formé sous le plateau distributeur et plus particulièrement d'améliorer le mélange du gaz et du liquide, notamment lorsque le volume de gaz est faible.

Dans ce cas, les ouvertures pratiquées au travers du plateau de distribution sont généralement dépourvues de toute paroi saillant d'un côté ou de l'autre de la plaque du plateau distributeur, et l'unique élément déflecteur associé à chaque cheminée présente une forme adaptée pour induire ledit mouvement de rotation au mélange gaz liquide, ce mouvement de rotation pouvant être induit entre la plaque et le déflecteur à contre-courant des flux liquide et gaz descendant et/ou à co-courant de ceux-ci. Chaque élément déflecteur associé à une cheminée peut être formé d'une plaque traversée d'une pluralité d'ouvertures agencées afin d'induire un mouvement de rotation au mélange gaz liquide les traversant.

Par exemple, chaque ouverture réalisée au travers de la plaque de l'élément déflecteur peut être agencée pour diriger le mélange gaz liquide suivant une direction inclinée d'un angle α par rapport à la plaque du plateau distributeur, d'un côté ou de l'autre de celui-ci. Cette direction est par exemple sensiblement tangente à un cercle dont la cheminée en dessous de laquelle est disposé le réflecteur est le centre.

Les ouvertures de chaque élément déflecteur peuvent ainsi présenter les mêmes caractéristiques que les ouvertures du plateau distributeur du premier mode de réalisation.

Selon une variante de l'invention, chaque ouverture de la plaque d'un élément déflecteur comprend, solidaire d'au moins une partie de son bord, une paroi déflectrice résultant par exemple du mode de découpage, perçage et/ou emboutissage des ouvertures du déflecteur : elle peut être de forme plane ou incurvée, inclinée d'un angle α par rapport à la plaque du plateau distributeur.

En particulier, chaque ouverture de l'élément déflecteur s'étend le long d'un rayon d'un cercle circonscrit dont cette cheminée est le centre, et toutes les ouvertures de l'élément déflecteur sont orientées dans une même direction par rapport à leur rayon respectif.

Par exemple, ces ouvertures de chaque élément déflecteur peuvent être formées en coupant deux cotés d'un triangle et en pliant la partie triangulaire ainsi découpée sur le troisième coté du triangle dans une direction opposée à la cheminée, le plan de la dite partie triangulaire pliée formant un angle α par rapport au plan de la plaque.

Quelque soit le mode de réalisation des ouvertures de chaque élément déflecteur, cet angle α est par exemple d'au moins 30°, de préférence de 30 à 60°.

Quelque soit la forme des ouvertures, chaque élément déflecteur peut comporter une ou plusieurs des caractéristiques suivantes :
- ses ouvertures peuvent être réparties régulièrement sur la périphérie de l'axe du déflecteur, à l'intérieur d'un cercle circonscrit de rayon inférieur, égal ou supérieur à celui entourant les ouvertures pratiquées dans le plateau distributeur,
- ses ouvertures peuvent être de forme circulaire, triangulaire, carré, rectangulaire ou tout autre polygone,
- ses ouvertures peuvent être distribuées sur la périphérie dudit élément déflecteur, autour d'un cercle de surface identique ou supérieure à celle de la section de la cheminée disposée au-dessus, éventuellement à l'intérieur d'un cercle de même dimension que le cercle circonscrit entourant les ouvertures traversant la plaque du plateau de distribution.
- ses ouvertures peuvent s'étendre jusqu'à un bord extérieur de la plaque formant ledit élément réflecteur, définissant ainsi des ailettes sur ledit bord extérieur de l'élément déflecteur.

Selon une autre variante de l'invention, chaque élément déflecteur est formé d'une pluralité d'ailettes inclinées d'un même angle α par rapport à la plaque du plateau distributeur, ces ailettes s'étendant radialement par rapport à l'axe de la cheminée associée à l'élément déflecteur, dans un plan sensiblement parallèle ou parallèle à la plaque du plateau distributeur

Cet angle α est par exemple d'au moins 30°, de préférence de 30 à 60°.

Dans cette forme de réalisation, les ailettes d'un même élément déflecteur peuvent être reliées entre elles du côté de leur extrémité proche de l'axe de la cheminée.

Quelque soit le mode de réalisation de l'élément déflecteur (avec des ouvertures ou des ailettes), la surface projetée de cet élément déflecteur sur le plateau distributeur peut être inscrite dans un cercle dont le centre est placé sur l'axe de la cheminée sous laquelle le dit élément déflecteur est disposé et dont le diamètre est toujours supérieur au diamètre de la cheminée, et de préférence égal ou supérieur au diamètre du cercle circonscrit entourant les ouvertures traversant le plateau distributeur disposées en périphérie de ladite cheminée.

Un tel élément déflecteur est de préférence fixe.

Quelque soit le mode de réalisation de l'élément déflecteur, ce dernier peut présenter une ou plusieurs des caractéristiques suivantes :
- chaque élément déflecteur peut être conformé de sorte que sa surface projetée sur la plaque du plateau distributeur recouvre la totalité des ouvertures périphériques entourant la cheminée sous laquelle il est disposé,
- chaque élément déflecteur peut être disposé à une distance de la plaque du plateau distributeur comprise de 1/8 fois d à 2 fois d, d étant le diamètre de la cheminée en dessous de laquelle est disposé l'élément déflecteur,
- chaque élément déflecteur peut s'étendre dans un plan parallèle à la plaque du plateau distributeur,
- les ouvertures ou les ailettes d'un élément déflecteur peuvent être disposées sous les ouvertures traversant la plaque du plateau de distribution.
- les parois associées aux ouvertures ou les ailettes sont orientées pour rediriger le mélange en un mouvement de rotation soit à contre-courant entre la plaque et le déflecteur ou à co-courant sous le déflecteur, relativement à la circulation du liquide et du gaz traversant le plateau de distribution.

Ces différentes caractéristiques prises seules ou en combinaison peuvent permettre d'améliorer le mélange liquide gaz.

Selon une variante, le plateau distributeur selon l'invention comprend autour de chaque cheminée, une paroi formant barrage solidaire de la plaque et s'étendant perpendiculairement à celle-ci, ladite paroi formant barrage entourant lesdites ouvertures, réalisées au travers de la plaque du plateau distributeur, en périphérie de la cheminée et comprenant une pluralité de lumières réparties sur sa surface pour le passage de liquide. Une telle paroi formant barrage permet de maintenir un niveau de liquide sur le plateau distributeur et de garantir ainsi l'alimentation en liquide de chaque ensemble d'ouvertures entourant une cheminée, même lorsque le niveau de liquide du plateau distributeur n'est pas parfaitement horizontal sur toute sa surface.

Cette paroi formant barrage est par exemple une paroi cylindrique disposée concentriquement par rapport à la cheminée entourée.

Les lumières de ladite paroi formant barrage sont de toutes formes, mais de préférence circulaires pour assurer le passage d'au moins 20% en volume du liquide, et au plus de 50% en volume du liquide, le restant passant par-dessus la dite paroi formant barrage par débordement.

Les parois des cheminées du plateau distributeur peuvent être pleines, dépourvues d'orifices.

En variante, chaque cheminée peut être pourvue dans sa partie inférieure d'orifices pour le passage de liquide à l'intérieur de la cheminée, ces orifices étant par exemple dimensionnés pour que la section de passage soit inférieure à la section de la cheminée, ces orifices ne devant pas laisser passer plus que 50% en volume de la quantité totale de liquide. De préférence, ces orifices permettront de faire passer moins de 20% en volume de la quantité totale de liquide.

Un autre objet de l'invention est un réacteur pour le traitement d'un liquide et d'un gaz circulant à co-courant descendant, ledit réacteur comprenant au moins un plateau distributeur selon l'invention, chaque plateau distributeur étant disposé en amont d'un lit catalytique par rapport au sens du flux gaz/liquide à traiter.

L'invention concerne également l'utilisation d'un plateau distributeur selon l'invention, pour distribuer de manière homogène un liquide et un gaz circulant à co-courant descendant dans un réacteur, dans lequel le gaz traverse le plateau via les cheminées de ce dernier, et le liquide traverse le plateau via les ouvertures de ce dernier, et via les éventuels orifices de chaque cheminée.

En particulier, le dit plateau est particulièrement adapté à des réacteurs pour lesquels du gaz et un liquide sont introduits dans un rapport volumique gaz/liquide est inférieur ou égal à 3, de préférence variant de 0.1 à 2, et plus préférentiellement variant de 0.4 à 1. Dans de telles applications le gaz contient préférablement de l'hydrogène.

Le dit plateau est utilisé dans des réacteurs d'hydrogénation d'une charge hydrocarbonée, par exemple pour l'hydrogénation sélective ou totale de coupes oléfiniques et/ou aromatiques, dans l'hydrotraitement (l'hydrodésulfuration, hydrodéazotation, hydrodématallisation), dans l'hydrocraquage, dans l'hydrodéparaffinage et/ou dans l'isomérisation des paraffines.

L'invention est maintenant décrite en référence aux dessins annexés, non limitatifs, dans lesquels :
- la figure 1 représente une vue de côté d'un plateau distributeur selon un mode de réalisation de l'invention;
- la figure 2 représente une vue en coupe du détail A représenté sur la figure 1, montrant en coupe une cheminée de ce plateau ;
- la figure 3a représente une vue de dessus du détail A représenté figure 1, montrant vue de dessus, la cheminée et les ouvertures en périphérie de la cheminée (3a) et la figure 3b est un détail de la figure 3a montrant l'angle de pliure α entre le plan de la dite partie triangulaire pliée et le plan de la plaque ;
- la figure 4 est identique à la figure 2, mais inclut un barrage qui entoure les ouvertures et représente les circulations de gaz et de liquide au travers du plateau de distribution représenté ;
- La figure 5 donne une représentation selon deux coupes, (A-A) et (B-B) des différents agencements possibles de cheminée, ouvertures, déflecteurs d'un plateau selon l'invention, le diamètre du déflecteur ayant un diamètre supérieur à celui de la cheminée mais pouvant être égal au plus grand diamètre du cercle circonscrit entourant les dites ouvertures périphériques autour de la cheminée,
- La figure 6a représente une vue schématique de côté d'un plateau distributeur selon un mode de réalisation de l'invention pour un mélange de gaz et de liquide à contre-courant, la figure 6b est une représentation d'un déflecteur selon la coupe (A-A) de la figure 6a et la figure 6c est un détail de la figure 6b montrant l'angle de pliure α entre le plan de la dite partie triangulaire pliée et le plan de la plaque formant le déflecteur ;
- La figure 7 représente une vue schématique de côté d'un plateau distributeur selon un mode de réalisation de l'invention pour un mélange de gaz et de liquide à co-courant.

Par direction sensiblement tangente à un cercle, on entend une direction tangente audit cercle ou formant un angle d'au plus ±20°, voire d'au plus ±10° ou d'au plus ±5° avec la tangente audit cercle.

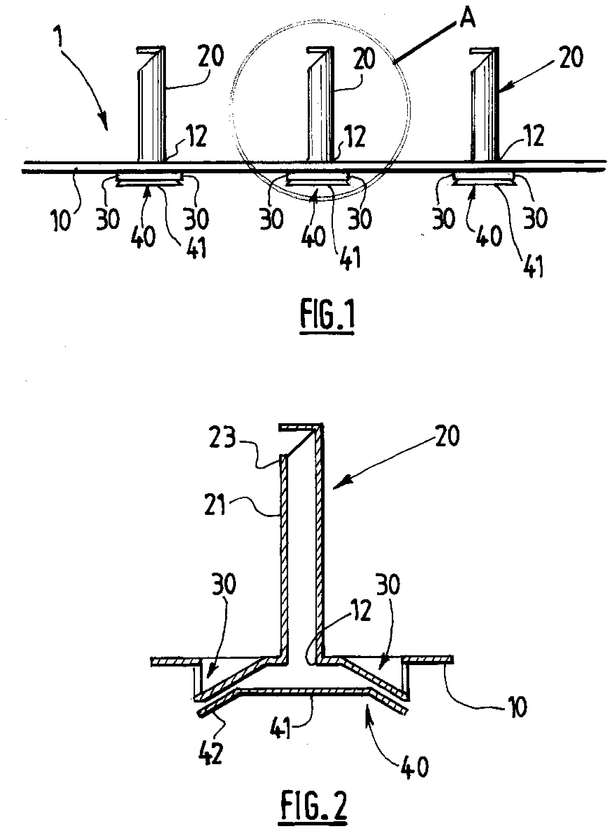

La figure 1 représente un plateau distributeur 1 d'un gaz et d'un liquide circulants à co-courant descendant.

Le plateau 1 comprend une plaque 10 perforée d'orifices 12 supportant des cheminées creuses 20 s'étendant perpendiculairement à ladite plaque 10. La plaque 10 pourra comprendre de 10 à 100, de préférence de 40 à 100 orifices 12 par mètre carré.

Chaque orifice 12 de la plaque 10 est surmonté par une cheminée 20 de même section que cet orifice 12. Les cheminées 20 sont situées entièrement au dessus de la plaque 10. On ne sortirait du cadre si ces cheminées débordaient en-dessous de la dite plaque. Généralement, les cheminées sont cylindriques, ouvertes ou partiellement fermées à leur extrémité supérieure.

Selon l'invention, la plaque 10 est équipée d'une pluralité d'ouvertures 30 disposées à la périphérie de chaque cheminée 20.

Dans l'exemple de la figure 2, chaque cheminée 20 est formée d'une paroi 21 cylindrique, dépourvue d'orifices. Le bord supérieur 23 de chaque cheminée est généralement semi-ouvert afin de ne laisser pénétrer que le gaz dans la cheminée.

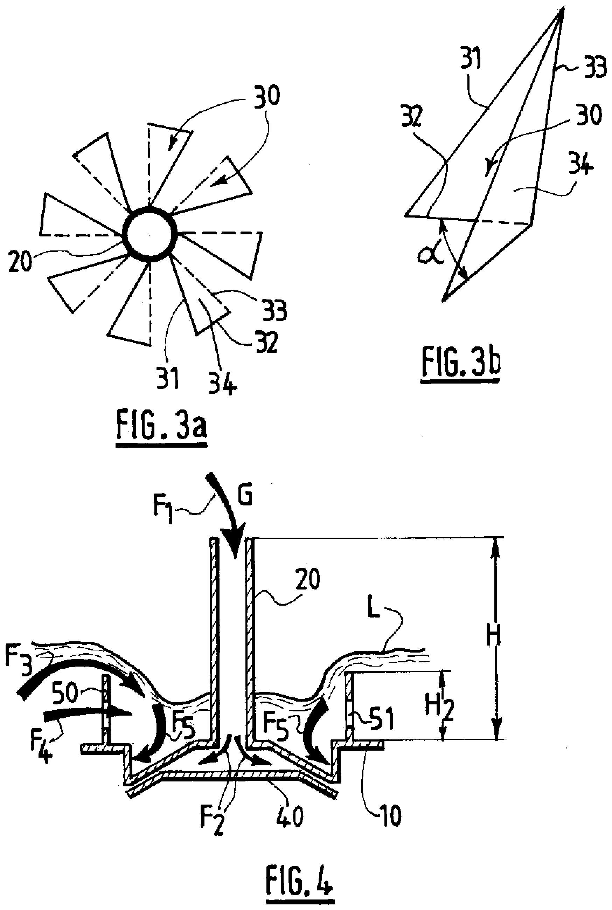

Les ouvertures 30 sont agencées afin d'induire un mouvement de rotation au liquide les traversant tel que représenté sur les figures 3a, 3b.

Chaque ouverture 30, telle que dessinée dans la figure 3b, est ainsi agencée pour diriger le liquide suivant une direction inclinée d'un angle α par rapport à la plaque 10 et sensiblement tangente à un cercle dont la cheminée 20 est le centre. Chaque ouverture 30 disposée sur la périphérie d'une cheminée s'étend en outre le long d'un rayon d'un cercle dont cette cheminée est le centre, et toutes les ouvertures 30 disposées sur la périphérie d'une même cheminée sont orientées dans une même direction par rapport à leur rayon respectif.

Dans l'exemple représenté sur les figures 2 et 3a,b, de telles ouvertures 30 sont formées en coupant deux cotés 31, 32 d'un triangle (figure 3a) et en pliant la partie triangulaire 34 ainsi découpée suivant le troisième coté 33 du triangle en dessous de la plaque 10 par rapport à la cheminée, ladite partie pliée formant un angle α par rapport au plan de la plaque 10 (figure 3b).

Les côtés 31 et 33 forment les plus grands côtés de la partie triangulaire 34.

Le troisième côté 33, le long duquel la partie triangulaire 34 découpée est pliée, peut s'étendre radialement depuis la cheminée 20. En variante, la partie triangulaire 34 peut être isocèle, les côtés 31 et 33 étant identiques et la hauteur de la partie triangulaire s'étendant radialement depuis la cheminée 20.

Toutes les parties triangulaires 34 découpées pour la formation des ouvertures 30 sont situées d'un même côté du troisième côté 33 du triangle, tel que visible sur la figure 3a. Autrement dit, toutes ces parties triangulaires 34 sont découpées de sorte que le liquide qu'elles laissent passer soit dirigé dans une même direction par rapport à un rayon d'un cercle de centre la cheminée 20.

L'angle d'inclinaison α de la partie triangulaire 34 par rapport à la plaque 10 est d'au moins 30°, de préférence de 30° à 60°.

Ces ouvertures 30 peuvent être obtenues par perçage/découpe et emboutissage.

Les ouvertures 30 représentées sont toutes identiques et réparties régulièrement sur la périphérie de chaque cheminée 20, tel que visible sur la figure 3a, favorisant une distribution homogène du mélange liquide gaz.

Le plateau distributeur 1 représenté en figure 1 comprend en outre, sous chaque orifice 12 surmonté d'une cheminée 20, au moins un élément déflecteur agencé pour diriger un gaz qui descend par la cheminée vers un liquide distribué en périphérie de la cheminée par les ouvertures 30.

Dans l'exemple représenté, un unique élément déflecteur 40 est disposé sous chaque cheminée 20. La surface projetée de cet élément déflecteur 40 sur la plaque 10 présente un contour entourant lesdites ouvertures 30 disposées à la périphérie de la cheminée auquel il est associé.

Ce contour peut être de forme circulaire ou polygonale, par exemple octogonale.

Dans la figure 2, l'élément déflecteur 40 comprend une paroi plane 41 pleine disposée sous la cheminée 20 parallèlement à la plaque 10, ladite paroi plane 41 étant bordée par une paroi inclinée 42. L'élément déflecteur 40 présente ainsi une forme convexe, dont la convexité est dirigée vers la cheminée 20.

Bien entendu on ne sortirait pas du cadre de l'invention si ce déflecteur convexe était remplacé par un déflecteur plan répondant aux mêmes caractéristiques, c'est-à-dire présentant un diamètre voisin de celui du cercle circonscrit entourant les ouvertures 30 autour de la cheminée 20.

L'élément déflecteur 40 est fixé sur la plaque 10 de l'autre côté et en-dessous de la cheminée 20, par tout moyen adéquat, notamment par des moyens ne perturbant pas le mélange du gaz et du liquide mélangé entre l'élément déflecteur 40 et la plaque 10. Il peut s'agir par exemple de tiges ou de vis (non représentées) ou encore par soudure sur les pointes des parties triangulaires 34.

La circulation du gaz et du liquide à travers le plateau distributeur selon l'invention est symbolisé par les flèches sur la figure 4. Dans le mode de réalisation représenté sur cette figure, le plateau distributeur 1 comprend également autour de chaque cheminée, une paroi formant barrage 50, solidaire de la plaque 10 et s'étendant perpendiculairement à celle-ci.

Cette paroi formant barrage 50 entoure les ouvertures 30 de la cheminée 20. Dans l'exemple représenté, cette paroi formant barrage 50 est un cylindre concentrique à la cheminée 20.

La paroi formant barrage 50 comprend une pluralité de lumières 51 réparties sur sa surface pour le passage de liquide.

La hauteur H2 de la paroi formant barrage 50 sera au plus égale à la moitié de la hauteur H de la cheminée qu'elle entoure. Le diamètre de la paroi formant barrage 50 sera au moins égal à trois ou quatre fois le diamètre de la cheminée 20 qu'elle entoure.

Le gaz G entre (flèche F1) par l'extrémité supérieure de la cheminée 20 et débouche, sous la plaque 10, en regard de l'élément déflecteur 40, lequel le dévie vers sa périphérie (flèches F2).

En présence d'une paroi formant barrage 50, le liquide L passe au dessus de cette paroi formant barrage 50 (flèche F3) ainsi que par ses orifices 51 (flèche F4) avant de traverser le plateau distributeur via les ouvertures 30 (flèches F5). Le liquide L se mélange au gaz G dans la zone définie par la plaque 10 et l'élément déflecteur 40.

La forme des ouvertures 30 induit un mouvement de rotation du liquide L, globalement centrifuge, qui favorise la distribution du mélange obtenu.

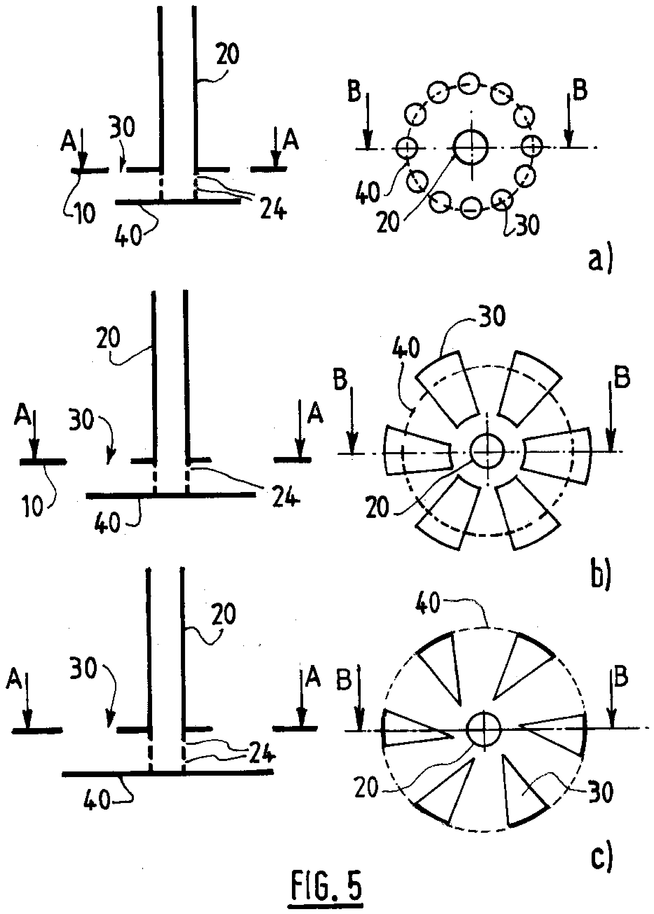

Dans la figure 5, sont représentés différents agencements (a), (b), (c) des cheminées/ ouvertures dans la plaque 10 et des déflecteurs, qu'il serait également possible de réaliser en accord avec la présente invention. La coupe (A-A) correspond à une vue de dessus de la plaque 10 représentant la forme des découpes des ouvertures 30 autour de la cheminée 20. En pointillés, sont représentés le contour du déflecteur 40 associé à chaque cheminée, celui-ci n'étant pas toujours de diamètre identique au cercle circonscrit couvrant les ouvertures 30 mais pouvant être légèrement inférieur. La coupe (B-B) est une coupe transversale sur l'axe de la cheminée 20 présentant différentes positions de la cheminée 20 et du déflecteur 40, l'extrémité inférieure de la dite cheminée 20 pouvant délimiter une fente 24 d'injection de gaz ayant pour effet une accélération de son injection sous les ouvertures 30 d'arrivée du liquide.

Le mouvement de rotation du liquide traversant le plateau de distribution via les ouvertures 30 peut être obtenu en inclinant, ou conformant de manière adaptée, la paroi déflectrice 34 issue de la découpe de l'ouverture 30, d'une manière similaire à celle décrite en référence aux figures 3a et 3b, y compris pour des ouvertures 30 de forme circulaire ou trapézoïdale ou autre.

En particulier, lorsque l'ouverture 30 est circulaire, la paroi déflectrice partiellement découpée est abaissée et peut présenter une forme de gouttière guidant le liquide dans la direction voulue pour induire un mouvement de rotation.

En variante, un résultat similaire peut être obtenu en solidarisant une paroi au bord de chaque ouverture, cette paroi étant disposée et orientée comme la paroi déflectrice 34 décrite ci-dessus.

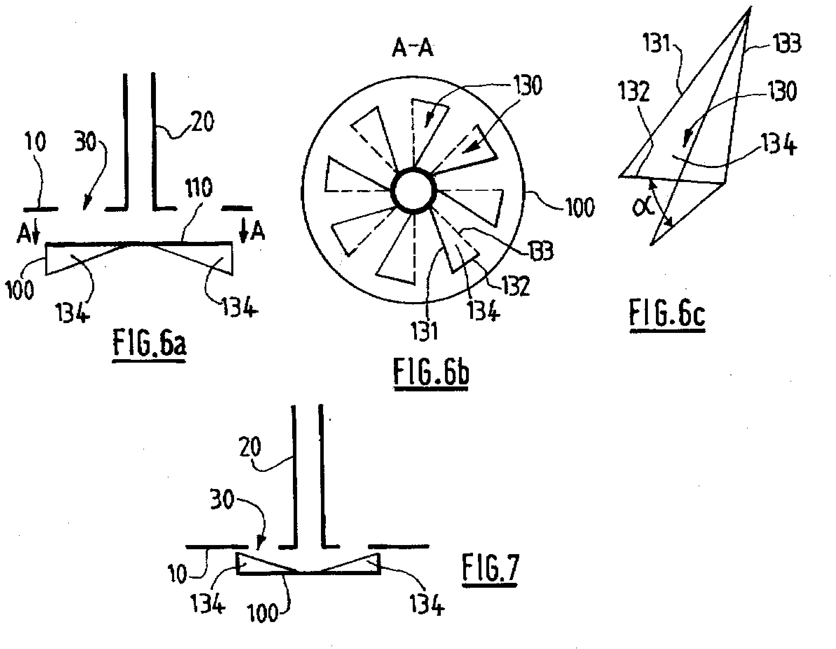

En variante ou en combinaison, le mouvement de rotation du liquide peut être obtenu en utilisant un élément déflecteur 100 de forme adaptée, tel que représenté sur les figures 6a, 6b, 6c. En particulier, cet élément déflecteur 100 peut être formé d'une plaque 110 percée d'ouvertures 130, ces ouvertures 130 étant agencées afin d'induire un mouvement de rotation au fluide les traversant. En particulier, le fluide est le mélange gaz liquide sortant du plateau distributeur.

La plaque 110 de l'élément déflecteur 100 s'étend parallèlement à la plaque 10 du plateau distributeur, sous celle-ci. La plaque 110 est disposée sous la plaque 10 du plateau distributeur, à une distance de cette dernière comprise de 1/8 fois d à 2 fois d, d étant le diamètre de la cheminée en dessous de laquelle est disposé l'élément déflecteur.

L'élément déflecteur 100 est tel que sa surface projetée sur la plaque 10 du plateau distributeur recouvre la totalité des ouvertures 30 périphériques entourant la cheminée 20 sous laquelle il est disposé. Ainsi, le liquide traversant la plaque 10 via les ouvertures 30 est mis en mouvement de rotation lorsqu'il entre en contact avec l'élément déflecteur 100. L'élément déflecteur 100 est centré sur la cheminée, les ouvertures 130 de l'élément déflecteur étant situées en dessous des ouvertures 30 de la plaque 10.

Chaque ouverture 130 de l'élément déflecteur 100 peut présenter une forme similaire à la forme des ouvertures 30 décrites en référence aux figures 3a, 3b. On notera que ces ouvertures 130 pourraient atteindre l'extrémité externe de l'élément déflecteur et définir ainsi des ailettes à la périphérie externe de l'élément déflecteur.

En référence aux figures 6a, 6b, 6c chaque ouverture 130, telle que dessinée dans la figure 6b, est ainsi agencée pour diriger le fluide suivant une direction inclinée d'un angle α par rapport à la plaque 110. Chaque ouverture 130 s'étend en outre le long d'un rayon d'un cercle de centre, le centre de l'élément déflecteur (aligné verticalement avec le centre d'une cheminée), et toutes les ouvertures 130 d'un même élément déflecteur 100 sont orientées dans une même direction par rapport à leur rayon respectif.

Dans l'exemple représenté sur les figures 6a,b,c de telles ouvertures 130 sont formées en coupant deux cotés 131, 132 d'un triangle (figure 6c) et en pliant la partie triangulaire 134 ainsi découpée suivant le troisième coté 133 du triangle en dessous de la plaque 110, ladite partie pliée 134 ou paroi déflectrice, formant un angle α par rapport au plan de la plaque 110 (figure 6c).

Les côtés 131 et 133 forment les plus grands côtés de la partie triangulaire 134 ou paroi déflectrice.

Le troisième côté 133, le long duquel la partie triangulaire 134 découpée est pliée, peut s'étendre radialement depuis le centre du déflecteur 100. En variante, la partie triangulaire ou paroi déflectrice 134 peut être isocèle, les côtés 131 et 133 étant identiques et la hauteur de la partie triangulaire s'étendant radialement depuis le centre du déflecteur.

Toutes les parties triangulaires 134 découpées pour la formation des ouvertures 130 sont situées d'un même côté du troisième côté 133 du triangle, tel que visible sur la figure 6b. Autrement dit, toutes ces parties triangulaires 134 sont découpées de sorte que le fluide qu'elles laissent passer soit dirigé dans une même direction par rapport à un rayon d'un cercle de centre confondu avec le centre de l'élément déflecteur 100 et l'axe de la cheminée sous laquelle est placé l'élément déflecteur.

L'angle d'inclinaison α de la partie triangulaire ou paroi déflectrice 134 par rapport à la plaque 110, et donc de la plaque 10 du plateau, est d'au moins 30°, de préférence de 30° à 60°.

Ces ouvertures 130 peuvent être obtenues par perçage/découpe et emboutissage.

Les ouvertures 130 représentées sont toutes identiques et réparties régulièrement sur la périphérie de chaque déflecteur, tel que visible sur la figure 6b, favorisant une distribution homogène du mélange liquide gaz.

La variante représentée sur la figure 7 ne diffère de celle représentée sur les figures 6a,b,c que par le fait que la partie triangulaire pliée 134 s'étend au dessus du plan du déflecteur 100, entre la plaque 110 et la plaque 10 au lieu d'être en-dessous.

La variante des figures 6a,b,c est particulièrement adaptée pour diriger le fluide ayant traversé le plateau de distribution en direction du plateau de distribution, autrement dit à contre courant de la circulation de gaz et de liquide.

La variante de la figure 7 est particulièrement adaptée pour diriger le fluide sortant de sous le plateau de distribution dans une direction opposée au plateau de distribution, autrement dit à co-courant de la circulation de gaz et de liquide.

Un élément déflecteur du type de celui décrit en référence aux figures 6 a,b,c et 7 peut être utilisé en remplacement du déflecteur 24 des figures 5a, b, c.

## Revendications

1. Plateau distributeur (1) d'un gaz et d'un liquide circulants à co-courant, ledit plateau comprenant une plaque (10) perforée d'orifices (12) et supportant des cheminées creuses (20) s'étendant perpendiculairement à ladite plaque (10), chaque orifice (12) de la plaque étant surmonté par une cheminée (20) de même section que ledit orifice (12), **caractérisé en ce que** la plaque (10) est équipée d'une pluralité d'ouvertures (30) disposées à la périphérie de chaque cheminée (20) à l'intérieur d'un cercle circonscrit dont le centre est confondu avec le centre de la cheminée (20), et de rayon inférieur ou égal à 1/3 de la distance la plus courte séparant deux cheminées (20) adjacentes, et **en ce qu'**un unique élément déflecteur (40, 100) est disposé sous chaque cheminée (20), les ouvertures (30) et l'élément déflecteur (40, 100) associés à chacune des cheminées (20) étant agencés afin d'induire un mouvement de rotation au mélange gaz-liquide sous chaque cheminée, et
**en ce que** les ouvertures (30) sont agencées afin d'induire un mouvement de rotation au liquide les traversant, chaque ouverture (30) comportant une paroi déflectrice (34), plane ou incurvée, partiellement découpée et abaissée dans une direction opposée à la cheminée ou obtenue en solidarisant une paroi au bord de l'ouverture, pour diriger le fluide suivant une direction inclinée d'un angle α par rapport à la plaque (10) et sensiblement tangente à un cercle dont la cheminée (20) est le centre,
ou **en ce que** les ouvertures (30) sont des orifices traversant, et l'unique élément déflecteur (100) associé à chaque cheminée (20) présente une forme adaptée pour induire ledit mouvement de rotation au mélange gaz liquide, chaque élément déflecteur (100) étant formé :
- d'une plaque (110) traversée d'une pluralité d'ouvertures (130) agencées afin d'induire un mouvement de rotation au fluide les traversant, chaque ouverture (130) comportant une paroi déflectrice (134), plane ou incurvée, pour diriger le fluide suivant une direction inclinée d'un angle α par rapport à la plaque (10) et sensiblement tangente à un cercle dont la cheminée (20) est le centre, ou
- d'une pluralité d'ailettes inclinées d'un même angle α par rapport à la plaque (10) du plateau distributeur.

2. Plateau distributeur selon la revendication 1, **caractérisé en ce que**, sous chaque orifice (12) surmonté d'une cheminée (20), l'élément déflecteur (40) est agencé pour diriger un gaz qui descend par la cheminée (20) vers un liquide distribué en périphérie de la cheminée (20) par lesdites ouvertures (30).

3. Plateau distributeur selon la revendication 2, **caractérisé en ce que** la surface projetée de l'unique élément déflecteur (40) sur la plaque présente un contour de diamètre supérieur à celui de la cheminée, éventuellement égal à celui du cercle circonscrit entourant lesdites ouvertures (30) disposées à la périphérie de la cheminée auquel il est associé et/ou **en ce que** l'unique élément déflecteur (40) sous chaque cheminée, présente une forme plane et/ou convexe dont la convexité est dirigée vers la cheminée.

4. Plateau distributeur selon l'une des revendications 1 à 3, **caractérisé en ce que** les ouvertures (30 ; 130), par exemple de forme circulaire, triangulaire, carré, rectangulaire ou tout autre polygone, sont réparties régulièrement sur la périphérie de chaque cheminée et de son axe, lesdites ouvertures (30 ; 130) étant notamment obtenues par perçage, découpe et/ou emboutissage.

5. Plateau distributeur selon l'une des revendications 1 à 4, **caractérisé en ce que** la paroi déflectrice (34 ; 134) associée à chaque ouverture (30 ; 130) résulte d'un découpage, perçage et/ou emboutissage.

6. Plateau distributeur selon l'une des revendications 1 à 5, **caractérisé en ce que** chaque ouverture (30 ; 130) s'étend le long d'un rayon d'un cercle dont le centre est sur l'axe de la cheminée, et toutes les ouvertures (30 ; 130) associées à une même cheminée ou sur un même déflecteur, sont orientées dans une même direction par rapport à leur rayon respectif.

7. Plateau distributeur l'une des revendications 1 à 6, **caractérisé en ce que** lesdites ouvertures (30 ; 130) sont formées en coupant deux cotés (31, 32 ; 131, 132) d'un triangle et en pliant la partie triangulaire ou paroi déflectrice (34 ; 134) ainsi découpée sur le troisième coté (33 ; 133) du triangle dans une direction opposée à la cheminée, ladite partie triangulaire ou partie déflectrice (34 ; 134) pliée formant un angle α par rapport au plan de la plaque (10).

8. Plateau distributeur selon l'une des revendications 1 à 7, **caractérisé en ce que** α est d'au moins 30°, de préférence de 30 à 60°.

9. Plateau distributeur selon l'une des revendications précédentes, **caractérisé en ce qu'**il comprend autour de chaque cheminée (20), une paroi formant barrage (50) solidaire de la plaque (10) et s'étendant perpendiculairement à celle-ci, ladite paroi formant barrage (50) entourant lesdites ouvertures (30) en périphérie de la cheminée (20) et comprenant une pluralité de lumières (51) réparties sur sa surface pour le passage de liquide, ladite paroi formant barrage (50) étant par exemple une paroi cylindrique disposée concentriquement par rapport à la cheminée (20) qu'elle entoure.

10. Plateau distributeur selon la revendication 9, **caractérisé en ce que** les lumières (51) de ladite paroi formant barrage (50) sont de toutes formes, mais de préférence circulaires pour assurer le passage d'au moins 20% en volume du liquide, et au plus de 50% en volume du liquide, le restant passant par-dessus la dite paroi formant barrage (50).

11. Plateau distributeur selon l'une des revendications 1 à 10, **caractérisé en ce que** les parois (21) des cheminées (20) sont pleines, dépourvues d'orifices ou **en ce que** chaque cheminée (20) est pourvue, dans sa partie inférieure, d'orifices pour le passage de liquide à l'intérieur de la cheminée, ces orifices ne devant pas laisser passer plus que 50% en volume de la quantité total de liquide, de préférence moins de 20% en volume de la quantité totale de liquide.

12. Réacteur pour le traitement d'un liquide et d'un gaz circulant à co-courant descendant, ledit réacteur comprenant au moins un plateau distributeur (1) selon l'une des revendications 1 à 11, chaque plateau distributeur étant disposé en amont d'un lit catalytique par rapport au sens du flux liquide/gaz.

13. Utilisation du plateau selon les revendications 1 à 11, pour distribuer de manière homogène un liquide et un gaz circulant à co-courant descendant dans un réacteur, dans lequel le gaz traverse le plateau via les cheminées de ce dernier, et le liquide traverse le plateau via les ouvertures de ce dernier, et éventuellement via les orifices de chaque cheminée.

14. Utilisation selon la revendication 13 dans laquelle on introduit dans le réacteur du gaz et un liquide dans un rapport volumique gaz/liquide inférieur ou égal à 3, de préférence variant de 0.1 à 2, et plus préférentiellement dans un rapport variant de 0.4 à 1.

15. Utilisation selon l'une des revendications 13 ou 14 dans laquelle le gaz contient de l'hydrogène et/ou le réacteur est un réacteur d'hydrogénation d'une charge hydrocarbonée, par exemple pour l'hydrogénation sélective ou totale de coupes oléfiniques et/ou aromatiques, dans l'hydrotraitement (l'hydrodésulfuration, hydrodéazotation, hydrodémétallisation), dans l'hydrocraquage, dans l'hydrodéparaffinage et/ou dans l'isomérisation des paraffines.

## Patentansprüche

1. Verteilerschale (1) für ein Gas und eine Flüssigkeit, die im Gleichstrom zirkulieren, wobei die Schale eine Platte (10) umfasst, die mit Öffnungen (12) perforiert ist und hohle Schächte (20) trägt, die sich senkrecht zu der Platte (10) erstrecken, wobei jede Öffnung (12) der Platte von einem Schacht (20) mit dem gleichen Querschnitt wie die Öffnung (12) überragt wird, **dadurch gekennzeichnet, dass** die Platte (10) mit mehreren Durchbrüchen (30) ausgestattet ist, die am Umfang jedes Schachts (20) im Inneren eines umgrenzenden Kreises angeordnet sind, dessen Mitte mit der Mitte des Schachts (20) zusammenfällt und dessen Radius kleiner als oder gleich 1/3 des kürzesten Abstands ist, der zwei benachbarte Schächte (20) trennt, und dass ein einzigartiges Ableiterelement (40, 100) unter jedem Schacht (20) angeordnet ist, wobei die Durchbrüche (30) und das Ableiterelement (40, 100), die mit jedem der Schächte (20) assoziiert sind, eingerichtet sind, um eine Drehbewegung des Gas-Flüssigkeit-Gemischs unter jedem Schacht zu induzieren, und
dass die Durchbrüche (30) eingerichtet sind, um eine Drehbewegung der Flüssigkeit, die durch sie hindurchtritt, zu induzieren, wobei jeder Durchbruch (30) eine ableitende, gerade oder gebogene Wand (34) umfasst, die in einer Richtung, die entgegengesetzt zu dem Schacht ist, partiell gestanzt und abgesenkt ist, oder durch festes Verbinden einer Wand mit dem Rand des Durchbruchs erhalten wird, um das Fluid gemäß einer Richtung zu leiten, die in einem Winkel α in Bezug auf die Platte (10) geneigt ist und im Wesentlichen einen Kreis berührt, von dem der Schacht (20) die Mitte ist,
oder dass die Durchbrüche (30) Durchtrittsöffnungen sind und das einzigartige Ableiterelement (100), das mit jedem Schacht (20) assoziiert ist, eine Form aufweist, die zum Induzieren der Drehbewegung des Gas-Flüssigkeit-Gemischs angepasst ist, wobei jedes Ableiterelement (100) gebildet wird von:
- einer Platte (110), durch die mehrere Durchbrüche (130) verlaufen, die eingerichtet sind, um eine Drehbewegung des Fluids, das durch sie hindurchtritt, zu induzieren, wobei jeder Durchbruch (130) eine ableitende, gerade oder gebogene Wand (134) umfasst, um das Fluid gemäß einer Richtung zu leiten, die in einem Winkel α in Bezug auf die Platte (10) geneigt ist und im Wesentlichen einen Kreis berührt, von dem der Schacht (20) die Mitte ist, oder
- mehreren Flügeln, die in demselben Winkel α in Bezug auf die Platte (10) der Verteilerschale geneigt sind.

2. Verteilerschale nach Anspruch 1, **dadurch gekennzeichnet, dass** unter jeder Öffnung (12), die von einem Schacht (20) überragt wird, das Ableiterelement (40) eingerichtet ist, um ein Gas, das durch den Schacht (20) herunterströmt, zu einer Flüssigkeit, die auf dem Umfang des Schachts (20) durch die Durchbrüche (30) verteilt wird, zu leiten.

3. Verteilerschale nach Anspruch 2, **dadurch gekennzeichnet, dass** die Fläche des einzigartigen Ableiterelements (40), die auf die Platte projiziert wird, einen Umriss mit einem Durchmesser aufweist, der größer als der des Schachts ist, gegebenenfalls gleich dem des umgrenzenden Kreises ist, der die Durchbrüche (30) umgibt, die am Umfang des Schachts angeordnet sind, mit dem er assoziiert ist, und/oder dass das einzigartige Ableiterelement (40) unter jedem Schacht eine gerade und/oder konvexe Form aufweist, deren Konvexität zum Schacht gerichtet ist.

4. Verteilerschale nach einem der Ansprüche 1 bis 3, **dadurch gekennzeichnet, dass** die Durchbrüche (30; 130), beispielsweise in der Form eines Kreises, Dreiecks, Quadrats, Rechtecks oder eines beliebigen anderen Polygons, gleichmäßig auf dem Umfang jedes Schachts und dessen Achse verteilt sind, wobei die Durchbrüche (30; 130) insbesondere durch Bohren, Stanzen und/oder Tiefziehen erhalten werden.

5. Verteilerschale nach einem der Ansprüche 1 bis 4, **dadurch gekennzeichnet, dass** die ableitende Wand (34; 134), die mit jedem Durchbruch (30; 130) assoziiert ist, aus einem Stanzen, Bohren und/oder Tiefziehen resultiert.

6. Verteilerschale nach einem der Ansprüche 1 bis 5, **dadurch gekennzeichnet, dass** jeder Durchbruch (30; 130) sich entlang einem Radius eines Kreises erstreckt, dessen Mitte auf der Achse des Schachtes ist, und alle Durchbrüche (30; 130), die mit demselben Schacht assoziiert sind oder auf demselben Ableiter sind, in derselben Richtung in Bezug auf ihren jeweiligen Radius ausgerichtet sind.

7. Verteilerschale nach einem der Ansprüche 1 bis 6, **dadurch gekennzeichnet, dass** die Durchbrüche (30; 130) durch Schneiden von zwei Seiten (31, 32; 131, 132) eines Dreiecks und durch Falzen des dreieckigen Teils oder der ableitenden Wand (34; 134), die so auf der dritten Seite (33; 133) des Dreiecks in einer Richtung, die entgegengesetzt zu dem Schacht ist, geschnitten wurde, gebildet werden, wobei der gefalzte dreieckige Teil oder ableitende Teil (34; 134) einen Winkel α in Bezug auf die Ebene der Platte (10) bildet.

8. Verteilerschale nach einem der Ansprüche 1 bis 7, **dadurch gekennzeichnet, dass** α mindestens 30°, vorzugsweise 30 bis 60° ist.

9. Verteilerschale nach einem der vorhergehenden Ansprüche, **dadurch gekennzeichnet, dass** sie um jeden Schacht (20) eine Wand umfasst, die eine Sperre (50) bildet, die fest mit der Platte (10) verbunden ist und sich senkrecht zu dieser erstreckt, wobei die Wand, die eine Sperre (50) bildet, die Durchbrüche (30) auf dem Umfang des Schachts (20) umgibt und mehrere Kanäle (51), die auf seiner Fläche verteilt sind, zum Durchleiten von Flüssigkeit umfasst, wobei die Wand, die eine Sperre (50) bildet, beispielsweise eine zylindrische Wand ist, die konzentrisch in Bezug auf den Schacht (20), den sie umgibt, angeordnet ist.

10. Verteilerschale nach Anspruch 9, **dadurch gekennzeichnet, dass** die Kanäle (51) der Wand, die eine Sperre (50) bildet, beliebige Formen aufweisen, jedoch vorzugsweise kreisförmig sind, um das Durchleiten von mindestens 20 Volumen-% der Flüssigkeit und höchstens 50 Volumen-% der Flüssigkeit sicherzustellen, wobei der Rest über der Wand, die eine Sperre (50) bildet, durchgeleitet wird.

11. Verteilerschale nach einem der Ansprüche 1 bis 10, **dadurch gekennzeichnet, dass** die Wände (21) von Schächten (20) massiv, frei von Öffnungen sind und dass jeder Schacht (20) in seinem unteren Teil mit Öffnungen zum Durchleiten von Flüssigkeit zum Inneren des Schachts versehen ist, wobei diese Öffnungen nicht mehr als 50 Volumen-% der Gesamtflüssigkeitsmenge, vorzugsweise weniger als 20 Volumen-% der Gesamtflüssigkeitsmenge durchleiten dürfen.

12. Reaktor zur Behandlung einer Flüssigkeit und eines Gases, die im Gleichstrom nach unten zirkulieren, wobei der Reaktor mindestens eine Verteilerschale (1) nach einem der Ansprüche 1 bis 11 umfasst, wobei jede Verteilerschale stromaufwärts von einem Katalysatorbett in Bezug auf die Richtung des Flüssigkeits-/Gasflusses angeordnet ist.

13. Verwendung der Schale nach einem der Ansprüche 1 bis 11 zum einheitlichen Verteilen einer Flüssigkeit und eines Gases, die in einem Reaktor im Gleichstrom nach unten zirkulieren, wobei das Gas mittels der Schächte der Platte durch die letztere hindurchtritt und die Flüssigkeit mittels der Durchbrüche der Platte und gegebenenfalls mittels der Öffnungen jedes Schachts durch die Platte hindurchtritt.

14. Verwendung nach Anspruch 13, wobei das Gas und eine Flüssigkeit in den Reaktor in einem Gas/Flüssigkeitsvolumenverhältnis kleiner als oder gleich 3, vorzugsweise von 0,1 bis 2 variierend und besonders bevorzugt in einem Verhältnis, das von 0,4 bis 1 variiert, eingebracht werden.

15. Verwendung nach einem der Ansprüche 13 oder 14, wobei das Gas Wasserstoff enthält und/oder der Reaktor ein Reaktor zur Hydrierung einer kohlenwasserstoffhaltigen Beschickung, beispielsweise zur selektiven oder vollständigen Hydrierung von olefinischen und/oder aromatischen Fraktionen ist, bei der Hydrobehandlung (Hydrodesulfurierung, Hydrodenitrierung, Hydrodemetallierung), beim Hydrocracken, bei der Hydroentparaffinierung und/oder der Isomerisierung von Paraffinen.

## Claims

1. A distributor tray (1) for a gas and a liquid circulating as a co-current, said tray comprising a plate (10) perforated by orifices (12) and supporting hollow chimneys (20) extending perpendicularly to said plate (10), each orifice (12) of the plate being surmounted by a chimney (20) of identical cross section to said orifice (12), **characterized in that** the plate (10) is equipped with a plurality of openings (30) arranged on the periphery of each chimney (20) inside a circumscribed circle, the centre of which coincides with the centre of the chimney (20), and the radius of which is less than or equal to 1/3 of the shortest distance separating two adjacent chimneys (20), and **in that** a single deflector element (40, 100) is arranged beneath each chimney (20), the openings (30) and the deflector element (40,100) associated with each of the chimneys (20) being so arranged as to impart a rotating movement to the gas/liquid mixture under each chimney, and
**in that** the openings (30) are so arranged as to impart a rotating movement to the liquid passing through them, each opening comprising a deflection wall (34), either plane or curved, partially punched and lowered in a direction opposite to the chimney or obtained by joining a wall to the edge of the opening, in order to guide the fluid in a direction that is inclined at an angle α in relation to the plate (10) and substantially tangent to a circle of which the chimney (20) is the centre,
or **in that** the openings (30) are transcurrent orifices, and the single deflector element (100) associated with each chimney (20) exhibits a form adapted to impart said rotating movement to the mixture of gas and liquid, each deflector element (100) being formed :
- by a plate (110) traversed by a plurality of openings (130) so arranged as to impart a rotating movement to the fluid passing through them, each opening (130) comprising a deflection wall (134), either plane or curved, in order to guide the fluid in a direction that is inclined at an angle α in relation to the plate (10) and substantially tangent to a circle of which the chimney (20) is the centre, or
- by a plurality of vanes inclined at the same angle α in relation to the plate (10) of the distributor tray.

2. The distributor tray according to Claim 1, **characterized in that**, beneath each orifice (12) surmounted by a chimney (20), the deflector element (40) is so arranged as to guide a gas descending through the chimney (20) towards a liquid distributed on the periphery of the chimney (20) through said openings (30).

3. The distributor tray according to Claim 2, **characterized in that** the surface of the single deflector element (40), when projected onto the plate, exhibits a contour having a diameter that is greater than that of the chimney, and is possibly equal to that of the circumscribed circle surrounding said openings (30) arranged on the periphery of the chimney with which it is associated and/or **in that** the single deflector element (40) beneath each chimney exhibits a plane and/or convex form, of which the convexity is directed towards the chimney.

4. The distributor tray according to any one of claims 1 to 3, **characterized in that** the openings (30;130), for example of circular, triangular, square, rectangular or any other polygonal form, are distributed at regular intervals on the periphery of each chimney and its axis, said openings (30; 130) being in particular obtained by drilling, punching and/or stamping.

5. The distributor tray according to any one of claims 1 to 4, **characterized in that** the deflection wall (34; 134) associated to each opening (30; 130) is produced by punching, drilling and/or stamping.

6. The distributor tray according to any one of Claims 1 to 5, **characterized in that** each opening (30; 130) extends along a radius of a circle of which the centre lies on the axis of the chimney, and all of the openings (30; 130) associated with one and the same chimney or on one and the same deflector are oriented in one and the same direction in relation to their respective radius.

7. The distributor tray according to any one of claims 1 to 6, **characterized in that** said openings (30; 130) are formed by cutting two sides (31, 32;131, 132) of a triangle and by folding the triangular part or the deflection wall (34; 134) cut in this way along the third side (33 ; 133) of the triangle in a direction opposite to the chimney, said folded triangular part or deflection part (34; 134) forming an angle α in relation to the plane of the plate (10).

8. The distributor tray according to any one of claims 1 to 7, **characterized in that** α is at least 30°, for example, and is preferably between 30° and 60°.

9. The distributor tray according to any one of the preceding claims, **characterized in that** it comprises around each chimney (20) a wall forming a barrier (50) that is integral with the plate (10) and extends perpendicular to it, said wall forming a barrier (50) surrounding said openings (30) on the periphery of the chimney (20) and comprising a plurality of holes (51) distributed over its surface for the passage of the liquid, said wall forming a barrier (50) being for example a cylindrical wall arranged concentrically in relation to the chimney (20) that it surrounds.

10. The distributor tray according to claim 9, **characterized in that** the holes (51) of said wall forming a barrier (50) are of all shapes, although preferably circular, in order to assure the passage of at least 20% in volume of the liquid and at most 50% in volume of the liquid, the remainder passing above said wall forming a barrier (50).

11. The distributor tray according to any one of claims 1 to 10, **characterized in that** the walls (21) of the chimneys (20) are solid and are devoid of orifices or **in that** each chimney (20) is provided, in its lower part, with orifices for the passage of liquid to the interior of the chimney, these orifices not being able to permit the passage of more than 50% in volume of the total quantity of liquid, and preferably less than 20% in volume of the total quantity of liquid.

12. A reactor for the treatment of a liquid and a gas circulating as a descending co-current, said reactor comprising at least one distributor tray (1) according to any one of claims 1 to 11, each distributor tray being arranged upstream of a catalytic bed in relation to the direction of the liquid/gas flow.

13. Use of the tray according to any one of Claims 1 to 11 to distribute in a homogeneous manner a liquid and a gas circulating as a descending co-current in a reactor, wherein the gas passes through the tray via the chimneys of the latter, and the liquid passes through the tray via the openings in the latter and, where appropriate, via the orifices of each chimney.

14. The use according to Claim 13, wherein gas and a liquid are introduced into the reactor in a gas/liquid volume ratio of less than or equal to 3, preferably in the range from 0.1 to 2, and more preferably in a ratio in the range from 0.4 to 1.

15. The use according to Claims 13 or 14, wherein the gas contains hydrogen and/or the reactor is a reactor for the hydrogenation of a hydrocarbon charge, for example for the selective or total hydrogenation of olefinic and/or aromatic cuts, in hydrotreatment (hydrodesulphurisation, hydrodenitrification, hydrodemetallization), in hydrocracking, in hydrodewaxing and/or in the isomerization of paraffins.
